# EUROPEAN PATENT SPECIFICATION

(11) **EP 4 376 136 B1**
(45) Date of publication and mention of the grant of the patent: **28.01.2026**
(21) Application number: 22864949.7
(22) Date of filing: 24.08.2022
(51) Int. Cl.: H01M 10/04, H01M 4/04

(54) **UNIT CELL MANUFACTURING APPARATUS AND MANUFACTURING METHOD**
VORRICHTUNG ZUR HERSTELLUNG VON EINHEITSZELLEN UND HERSTELLUNGSVERFAHREN
APPAREIL DE FABRICATION DE CELLULE UNITAIRE ET PROCÉDÉ DE FABRICATION

(30) Priority: 03.09.2021 KR 20210117702
(43) Date of publication of application: 29.05.2024
(73) Proprietor: LG ENERGY SOLUTION, LTD., Seoul 07335 (KR)
(72) Inventor: PARK, Yun Ho, Daejeon 34122 (KR); NO, Gyo Ryun, Daejeon 34122 (KR)
(74) Representative: Plasseraud IP
(86) International application number: PCT/KR2022/012654
(87) International publication number: WO 2023/033446

(56) References cited:
- JP-A- 2017 045 536
- JP-A- 2018 200 937
- JP-A- 2019 061 870
- KR-A- 20190 113 907
- KR-A- 20200 113 823
- ANONYMOUS: "The IUPAC Compendium of Chemical Terminology : The Gold Book", 7 October 2008 (2008-10-07), XP093273773, Retrieved from the Internet <URL:https://web.archive.org/web/20210421231922/https://en.wikipedia.org/wiki/Auxiliary_electrode> DOI: 10.1351/goldbook.A00535

## Description

### [Technical Field]

The present disclosure relates to a unit cell manufacturing device and a manufacturing method. More specifically, the present disclosure relates to a unit cell manufacturing device and a manufacturing method in which the position of at least one of a central electrode, an upper separator, a lower separator, an upper electrode, and a lower electrode is corrected.

### [Background Art]

As technology development and demand for mobile devices is increased, rechargeable secondary batteries are widely used as energy sources for various mobile devices. In addition, the secondary battery is also attracting attention as an energy source for electric vehicles, hybrid vehicles, etc., which are proposed as a solution to air pollution caused by existing gasoline vehicles or diesel vehicles.

Secondary batteries are classified into coin-type batteries, cylindrical batteries, prismatic batteries, and pouch-type batteries depending on the shape of the battery case. In general, the electrode assembly built into the battery case is classified into a jelly-roll type obtained by interposing a separator between the positive electrode and the negative electrode and then winding them, a stack type obtained by stacking a plurality of unit cells with a separator interposed between the positive electrode and the negative electrode, and a stack/folding type obtained by winding unit cells with a separation film.

A unit cell of a stacked electrode assembly can be manufactured by cutting a laminate containing a central electrode, an upper separator disposed on the upper surface of the central electrode, a lower separator disposed on the lower surface of the central electrode, an upper electrode disposed on the upper separator, and a lower electrode placed on the lower separator. At this time, it is necessary to improve the alignment among the central electrode, the upper separator, the lower separator, the upper electrode and the lower electrode in the unit cell.

### [Prior Art Document]

### [Patent Document]

(Patent Document 1) Korean Laid-open Patent Publication No. 10-2021-0058170
(Patent Document 2) Korean Laid-open Patent Publication No. 10-2019-0113907 discloses a method for producing mono-cell.

### [Disclosure]

### [Technical Problem]

It is an object of the present disclosure to provide a unit cell manufacturing device and a manufacturing method capable of improving alignment of unit cells.

It is another object of the present disclosure to provide a unit cell manufacturing device and a manufacturing method capable of automatic correction.

### [Technical Solution]

In order to solve the above problems, the present invention can correct the position of at least one of the central electrode, the upper electrode, and the lower electrode and/or the cutting position of the laminate cutting part for cutting the upper separator and the lower separator as exemplary means.

The present invention provides a unit cell manufacturing device comprising a laminate conveying part for conveying a laminate containing an central electrode, an upper separator disposed on one surface of the central electrode, a lower separator disposed on the other surface of the central electrode, an upper electrode disposed on the upper separator and a lower electrode disposed on the lower separator; a central electrode conveying part for supplying the central electrode to the laminate conveying part; an upper electrode conveying part for supplying the upper electrode to the laminate conveying part; a lower electrode conveying part for supplying the lower electrode to the laminate conveying part; a laminate cutting part that forms a unit cell by cutting the upper separator and the lower separator of the laminate; a vision part for measuring a measurement value comprising the position information of at least one of the central electrode, the upper separator, the lower separator, the upper electrode, and the lower electrode in the unit cell; and a control part for calculating the position correction value of at least one of the central electrode, the upper separator, the lower separator, the upper electrode, and the lower electrode, based on the measurement value measured in the vision part, and correcting at least one of the position of the central electrode supplied to the laminate conveying part, the position of the upper electrode supplied to the laminate conveying part, the position of the lower electrode supplied to the laminate conveying part and the cutting position of the laminate cutting part, based on the calculated position correction value, wherein the vision part comprises at least one of an upper vision part disposed adjacent to the upper electrode of the unit cell and a lower vision part disposed adjacent to the lower electrode of the unit cell, the upper vision part is configured to measure at least one of a distance between a first side portion of the upper separator and a first side portion of a tab of the central electrode, a distance between the first side portion and a second side portion of the upper separator and first and second side portions of the upper electrode, respectively, a distance between first and second end portions of the upper separator and first and second end portions of the upper electrode, or a distance between one of the end portions of the upper separator and an end portion of the tab of the central electrode, the lower vision part is configured to measure at least one of a distance between a first side portion of the lower separator and a first side portion of the tab of the central electrode, a distance between the first side portion and a second side portion of the lower separator and first and second side portions of the lower electrode, respectively, a distance between first and second end portions of the lower separator and first and second end portions of the lower electrode, or a distance between one of the end portions of the lower separator and the end portion of the tab of the central electrode, and one of the end portions of each of the upper separator and the lower separator is closer to the tab of the central electrode than another one of the end portions of each of the upper separator and the lower separator.

In addition, the present invention provides a unit cell manufacturing method comprising a step of forming a laminate containing a central electrode, an upper separator disposed on one side of the central electrode, a lower separator disposed on the other surface of the central electrode, an upper electrode disposed on the upper separator and a lower electrode disposed on the lower separator; a step of forming a unit cell by cutting the upper separator and the lower separator of the laminate; a step of measuring a measurement value comprising the position information of at least one of the central electrode, the upper separator, the lower separator, the upper electrode and the lower electrode in the unit cell; a step of calculating the position correction value of at least one of the central electrode, the upper separator, the lower separator, the upper electrode, and the lower electrode, based on the measurement value; a step of correcting at least one of the position of the central electrode in the step of forming the laminate, the position of the upper electrode in the step of forming the laminate, the position of the lower electrode in the step of forming the laminate, and the cutting position of the laminate in the step of forming the unit cell, based on the calculated position correction value.

### [Advantageous Effects]

As an effect of the present disclosure, it is possible to provide a unit cell manufacturing device and a manufacturing method capable of improving alignment of unit cells.

As another effect of the present disclosure, it is possible to provide a unit cell manufacturing device and a manufacturing method capable of automatic correction.

### [Description of Drawings]

FIG. 1 is a schematic diagram of a unit cell manufacturing device according to an embodiment of the present invention.
FIG. 2 is a perspective view of a unit cell according to an embodiment of the present invention.
FIG. 3 is a perspective view of a unit cell according to another embodiment of the present invention.
FIG. 4 is a diagram for explaining a measurement value measured by a vision part in a unit cell according to an embodiment of the present invention.
FIG. 5 is a diagram for explaining a measurement value measured by a vision part in a unit cell according to another embodiment of the present invention.
FIG. 6 is a diagram for explaining a measurement value measured by a vision part in a unit cell according to another embodiment of the present invention.
FIG. 7 is a graph showing the improvement of the process capability index (Ppk) according to the present invention.
FIG. 8 is a graph showing a decrease in defect rate according to the present invention.
FIG. 9 is a graph showing the decrease in the number of manual corrections of the operator according to the present invention.

### [Best Mode]

Hereinafter, embodiments of the present invention will be described in detail with reference to the accompanying drawings. In the drawings, all or part of each configuration may be exaggerated for convenience of description. In addition, it will be apparent to those skilled in the art that the present invention is not limited to the accompanying drawings or the content described in this specification, and the present invention may be implemented in various forms without departing from the scope of the present invention as defined in the appended claims.

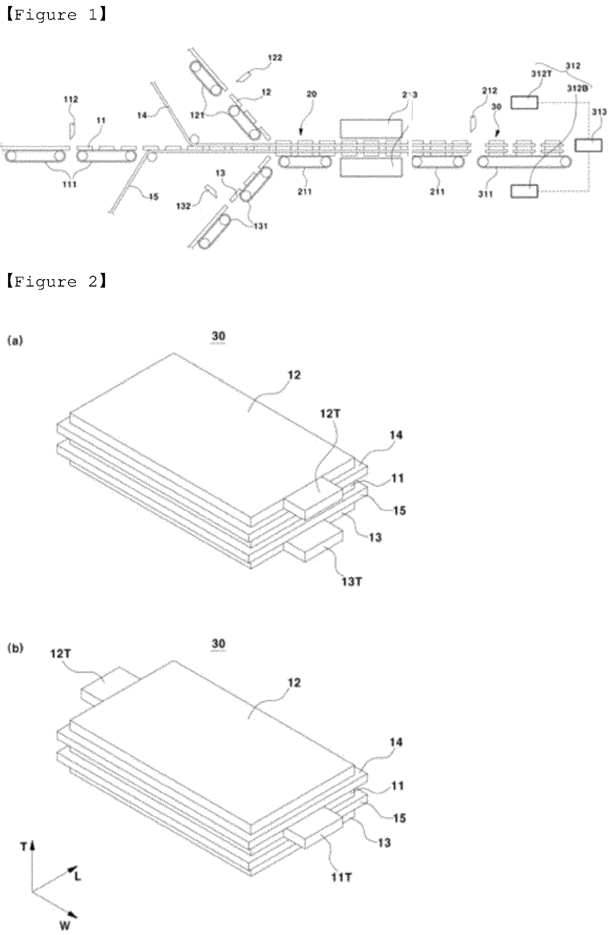

FIG. 1 is a schematic diagram of a unit cell manufacturing device according to an embodiment of the present invention.

In the present specification, each of the longitudinal direction L, the widthwise direction W and the thickness direction T is based on the conveying direction of the electrodes 11, 12, 13, the laminate 20 and the unit cell 30, respectively. Specifically, the conveying direction of each of the electrode 11, 12, 13, the laminate 20 and the unit cell 30 is referred to as a longitudinal direction L, the direction perpendicular to the longitudinal direction L on a plane is referred to as a widthwise direction W, and the direction perpendicular to the longitudinal direction L and the widthwise direction W is referred to as a thickness direction T. Unless otherwise described, the plane means a plane formed by the longitudinal direction L and the widthwise direction W. In addition, both side portions of any configuration refer to one side portion and the other side portion facing in the longitudinal direction L, and both end portions of any configuration refer to one end portion and the other end portion facing in the widthwise direction W.

Referring to the drawings, a unit cell manufacturing device according to an embodiment of the present invention may comprise a central electrode conveying part 111 for conveying the central electrode 11, a central electrode cutting part 112 for cutting the central electrode 11, an upper electrode conveying part 121 for conveying the upper electrode 12, an upper electrode cutting part 122 for cutting the upper electrode 12, a lower electrode conveying part 131 for conveying the lower electrode 13, a laminate conveying part 211 for conveying the laminate 20 comprising the cut central electrode 11, the cut upper electrode 12, the cut lower electrode 13, the upper separator 14 and the lower separator 15, a laminate cutting part 212 for cutting a laminate 20 to form a unit cell 30, a lamination part 213 for heating and pressing the laminate 20, a unit cell conveying part 311 for conveying the unit cell 30, a vision part 312 for measuring the unit cell 30 and a control part 313 for improving the alignment of the unit cell 30 based on the measurement value measured by the vision part 312.

The central electrode conveying part 111, the upper electrode conveying part 121 and the lower electrode conveying part 131 each may serve to transport the central electrode 11, the upper electrode 12 and the lower electrode 13, respectively. Specifically, each of the central electrode conveying part 111, the upper electrode conveying part 121 and the lower electrode conveying part 131 may convey each of the central electrode 11, the upper electrode 12 and the lower electrode 13 to supply them to the laminate conveying part 211. Each of the central electrode conveying part 111, the upper electrode conveying part 121 and the lower electrode conveying part 131 may be a conveyor belt, and may separate and convey the plurality of cut electrodes at regular intervals from each other after the electrodes are cut.

Each of the central electrode cutting part 112, the upper electrode cutting part 122 and the lower electrode cutting part 132 may serve to cut each of the central electrode 11, the upper electrode 12, and the lower electrode 13. To this end, each of the central electrode cutting part 112, the upper electrode cutting part 122 and the lower electrode cutting part 132 may comprise a cutting means such as a blade, a wheel, and a laser. For convenience of explanation, in the present specification, the electrode sheet and the individual electrodes formed by cutting the electrode sheet will be all referred to as electrodes (11, 12, and 13) without distinguishing the terms from each other.

The laminate 20 comprises a central electrode 11, an upper separator 14 disposed on one side of the central electrode 11, a lower separator 15 disposed on the other side of the central electrode 11, an upper electrode 12 disposed on the upper separator 14 and a lower electrode 13 disposed on the lower separator 15. That is, the laminate 20 has a structure in which the upper separator 14 and the upper electrode 12 are sequentially stacked on one side of the central electrode 11 and the lower separator 15 and the lower electrode 13 are sequentially stacked on the other side. In other words, the laminate 20 has a structure in which the lower electrode 13, the lower separator 15, the central electrode 11, the upper separator 14 and the upper electrode 12 are sequentially stacked from the lower side.

The laminate conveying part 211 may serve to convey the laminate 20. Specifically, the laminate conveying part 211 may convey the central electrode 11, the upper electrode 12 and the lower electrode 13 supplied from each of the central electrode conveying part 111, the upper electrode conveying part 121 and the lower electrode conveying parts 131 to be supplied to a subsequent unit such as the unit cell conveying part 311. The laminate conveying part 211 may also be a conveyor belt.

The laminate cutting part 212 cuts the laminate 20 to form a unit cell 30. To this end, the laminate cutting part 212 may also comprise a cutting means such as a blade, a wheel, and a laser.

The lamination part 213 may serve to fix the laminate 20 by heating and/or pressing. The lamination part 213 may include at least one of a lamination roller and a lamination heater, and the laminate 20 may be heated and/or pressed through a lamination roller and then heated through a lamination heater, but is not limited thereto.

The unit cell conveying part 311 may serve to convey the unit cell 30. The unit cell conveying part 311 may also be a conveyor belt, and may convey a plurality of unit cells 30 spaced apart from each other at regular intervals.

The vision part 312 measures the unit cell 30. Specifically, the vision part 312 may measure a measurement value including position information of at least one of the central electrode 11, the upper separator 14, the lower separator 15, the upper electrode 12 and the lower electrodes 13 of the unit cell 30. In other words, the measurement value of the unit cell 30 measured by the vision part 312 comprises position information of at least one of the central electrode 11, the upper separator 14, the lower separator 15, the upper electrode 12 and the lower electrode 13. Through this, it is possible to measure the alignment state between each component of the unit cell 30.

The vision part 312 may measure a measurement value of each of the plurality of unit cells 30. That is, the vision part 312 may measure a value including position information of at least one of the central electrode 11, the upper separator 14, the lower separator 15, the upper electrode 12 and the lower electrode 13 of each of the plurality of unit cells 30) which is a measurement value of each of the plurality of unit cells 30.

The vision part 312 comprises at least one of the upper vision part 312T disposed on the upper electrode 12 of the unit cell 30 and the lower vision part 312B disposed on the lower electrode 13 of the unit cell 30. Preferably, the vision part 313 comprises all of the upper vision part 312T disposed on the upper electrode 12 of the unit cell 30 and the lower vision part 312B disposed on the lower electrode 13 of the unit cell 30.

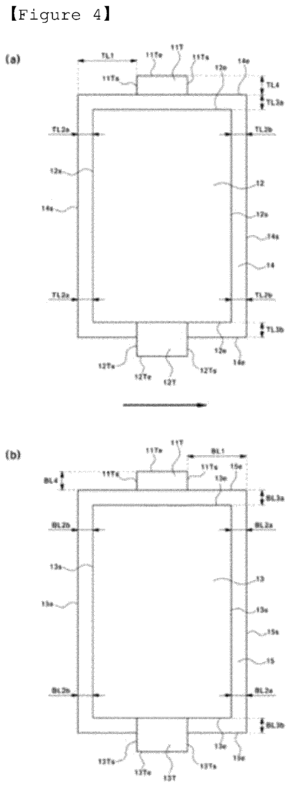

The upper vision part 312T measures the central electrode 11, the upper separator 14 and the upper electrode 12. In addition, the lower vision part 312B measures the central electrode 11, the lower separator 15 and the lower electrode 13. Specific measurement values measured by each of the upper vision part 312T and the lower vision part 312B will be described in detail in the description with respect to FIG. 4 to FIG. 6.

The control part 313 improves the alignment of the unit cell 30 based on the measurement value measured by the vision part 312. Specifically, the control part 313 may calculate the position correction value of at least one of the central electrode 11, the upper separator 14, the lower separator 15, the upper electrode 12 and the lower electrode 13, based on the measurement value measured in the vision part 312. Preferably, the control part 313 calculates the position correction value of each of the central electrode 11, the upper separator 14, the lower separator 15, the upper electrode 12 and the lower electrode 13, based on the measurement value measured in the vision part 312. In this case, the position correction value comprises at least one of a correction direction and a correction distance. Also, the control part 313 may correct at least one of the position of the central electrode 11 supplied to the laminate conveying part 211, the position of the upper electrode 12 supplied to the laminate conveying part 211, the position of the lower electrode 13 supplied to the laminate conveying part 211 and the cutting position of the laminate cutting part 212 based on the calculated position correction value. In this case, the control part 313 may automatically perform correction through the system, based on the calculated position correction value of at least one of the central electrode 11, the upper separator 14, the lower separator 15, the upper electrode 12 and the lower electrode 13, and in this regard, the control part 313 may comprise a programmable logic controller (PLC).

As described above, the vision part 312 may measure the measurement values of the plurality of unit cells 30, and in this case, the control part 313 may calculate the position correction value based on the average value of each measurement value of the plurality of unit cells 30. Through this, the control part 313 may calculate the position correction value based on a trend of misalignment of the plurality of unit cells 30.

In this case, it is possible to set at least one of the number of a plurality of unit cells 30 used in the calculation of the position correction value in the control part 313, the position correction value at which correction is started, the percentage of the actual position correction value to the position correction value, the first PLC transmission cycle and the second PLC transmission cycle to transmit the position correction value to the PLC, and the cycle to which the second PLC transmission cycle is applied. Here, the second PLC transmission cycle is a cycle which is applied immediately after the type of unit cell is replaced, and the first PLC transmission cycle is a cycle applied after being applied during the cycle to be applied the second PLC transmission cycle.

For example, if the number of the plurality of unit cells 30 used for the calculation of the position correction value is set to 20, the control part 313 may calculate the position correction value based on an average value of measurement values of 20 unit cells 30.

The position correction value at which correction is started is to prevent excessive correction. For example, if the position correction value at which correction is started is set to 1 mm, the position correction is performed only when the calculated position correction value is 1mm or more. Accordingly, the calculated position correction value is less than 1 mm, the control part 313 does not perform the position correction.

The percentage of the actual position correction value to the position correction value is also to prevent excessive correction. For example, if the percentage of the actual position correction value to the position correction value is set to 70%, the actual position correction is performed by a value corresponding to 70% of the calculated position correction value.

The first PLC transmission cycle is to prevent system delay. The vision part 312 may continuously measure a measurement value of each of the plurality of unit cells 30, and the control part 313 may calculate the position correction value and perform the correction in real time, according to the measurement value of each of the plurality of unit cells 30 continuously measured, but this may not be preferable in terms of efficiency. Therefore, it is possible to set the first PLC transmission cycle and transmit the calculated position correction value to the PLC every set cycle and thus perform correction according to the position correction value transmitted to the PLC. At this time, the first PLC transmission cycle may be based on the number of the plurality of unit cells 30. For example, if the number of the first PLC transmission cycles is 30, the position correction value may be transmitted to the PLC based on 30 unit cells 30. If the number of the plurality of unit cells 30 used for the calculation of the position correction value is 20, and the number of the first PLC transmission cycle is 30, the control part 313 may first transmit the position correction value calculated based on the average value of the measurement values from the first unit cell 30 to the 20th unit cell 30 to the PLC, and may secondarily transmit the position correction value calculated based on the average value of the measurement values from the 31st unit cell 30 to the 50th unit cell 30 to the PLC. However, the first PLC transmission cycle may be set based on time. In addition, a similar effect may be obtained by setting the cycle to update the position correction value instead of the first PLC transmission cycle.

The second PLC transmission cycle is to increase the transmission frequency of the position correction value, which is the basis of the correction, by applying the PLC transmission cycle of the shortened position correction value immediately after the type of the unit cell 30 with a relatively high alignment defect rate of the unit cell 30 is replaced. In this regard, the second PLC transmission cycle that transmits the position correction value immediately after the type of unit cell 30 is replaced may be different from the first PLC transmission cycle described above, and specifically, may be shorter than the first PLC transmission cycle. However, depending on the design, the second PLC transmission cycle may be set equal to the first PLC transmission cycle or longer than the first PLC transmission cycle. The second PLC transmission cycle may also be based on the number of the plurality of unit cells 30, but may also be set based on time. In addition, a similar effect may be obtained by setting a cycle for updating the position correction value immediately after the type of unit cell 30 is replaced instead of the second PLC transmission cycle. In addition, a similar effect may be obtained by setting a cycle for updating the position correction value immediately after the type of unit cell 30 is replaced instead of the second PLC transmission cycle.

The cycle to which the second PLC transmission cycle is applied is the cycle to which the second PLC transmission cycle is applied immediately after the type of the unit cell 30 is replaced. Accordingly, the second PLC transmission cycle is applied during the cycle to which the second PLC transmission cycle is applied immediately after the type of the unit cell 30 is replaced, and the first PLC transmission cycle is applied after the cycle in which the second PLC transmission cycle is applied has elapsed immediately after the type of the unit cell 30 is replaced. The cycle to which the second PLC transmission cycle is applied may also be based on the number of the plurality of unit cells 30, but may also be set based on time.

In addition, when the control part 313 calculates the position correction value based on the average value of the measurement values of each of the plurality of unit cells 30, at least one of the measurement value outside the reference range among the measurement values of the n^{th} unit cell 30 and the measurement value having a difference equal to or greater than the reference value from the measurement value of the n-1^{th} unit cell 30 may be excluded from the measurement values that are the basis of the calculation. Depending on the measurement error of the vision part 312, an incorrect measurement value may be comprised in the measurement value, and when it is comprised in the measurement values that are the basis of calculation, there may be an error in the position correction value. Therefore, the control part 313 may exclude a measurement value outside the reference range among the measurement values of the n^{th} unit cell 30 from the measurement values that are the basis of calculation, and for example, may exclude a measurement value higher than the upper limit range and a measurement value lower than the lower limit range from the measurement values that are the basis of the calculation. In addition, the control part 313 may exclude a measurement value having a difference equal to or greater than the reference value from the measurement value of the n-1^{th} unit cell 30 from the measurement values that are the basis of the calculation, and for example, may exclude a measurement value that is larger or smaller than the measurement value of the n-1^{th} unit cell 30 by a reference value or more from measurement values that are the basis of calculation.

As described above, the control part 313 may calculate the position correction value of at least one of the central electrode 11, the upper separator 14, the lower separator 15, the upper electrode 12 and the lower electrode 13 based on the measurement value measured in the vision part 312. Also, the control part 313 may correct at least one of the position of the central electrode 11 supplied to the laminate conveying part 211, the position of the upper electrode 12 supplied to the laminate conveying part 211, the position of the lower electrode 13 supplied to the laminate conveying part 211 and the cutting position of the laminate cutting part 212 based on the calculated position correction value.

The control part 313 may correct the position of the central electrode 11 in the widthwise direction W. In addition, the control part 313 may correct the position of each of the upper electrode 12 and the lower electrode 13 in the longitudinal direction L and the widthwise direction W.

The control part 313 may correct the positions of the central electrode 11, the upper electrode 12 and the lower electrode 13 in the widthwise direction W by adjusting the position of the Edge Position Control (EPC) sensor measuring the position of each end portion of the central electrode 11, the upper electrode 12 and the lower electrode 13. Specifically, each of the central electrode conveying part 111, the upper electrode conveying part 121 and the lower electrode conveying part 131 may comprise an EPC roller for adjusting the position of the electrodes 11, 12, 13 in the widthwise direction W according to the Edge Position Control (EPC) sensor for measuring the position of at least one end portion of the electrodes 11, 12, 13 and the value measured by the EPC sensor, and the control part 313 may adjust the position of the EPC sensor comprised in each of the central electrode conveying part 111, the upper electrode conveying part 121, and the lower electrode conveying part 131. At this time, the EPC sensor is disposed before the electrodes 11, 12, 13 are cut into the cutting parts 112, 122, 132, and thus each of the central electrode 11, the upper electrode 12 and the lower electrode 13, which are corrected for their position in the widthwise direction W by the control part 313, is an electrode sheet before being cut into each of the central electrode cutting part 112, the upper electrode cutting part 122 and the lower electrode cutting part 132.

In addition, the control part 313 may correct each position of the upper electrode 12 and the lower electrode 13 in the longitudinal direction L by adjusting the speed of each of the upper electrode 12 and the lower electrode 13 supplied to the laminate conveying part 211. At this time, each of the upper electrode 12 and the lower electrode 13, which are corrected in position in the longitudinal direction L by the control part 313, is an individual electrode cut into each of the upper electrode cutting part 122 and the lower electrode cutting part 132.

The correction of the cutting position of the laminate cutting part 212 may be performed by automatic correction through the system in the control part 313 based on the position correction value calculated in the control part 313, and may also be performed by manual correction by directly inputting the cutting position of the laminate cutting part 212 corrected by the calculated position correction value to the control part 313 by the operator.

The control part 313 may have an alarm function. For example, the control part 313 determines a defect in the placement angle according to the rotation of the central electrode 11, a defect in placement angle according to the rotation of the upper electrode 12, a defect in placement angle according to the rotation of the lower electrode 13, a defect in the cutting of the central electrode 11, a defect in the cutting of the upper electrode 12, a defect in the cutting of the lower electrode 13, and a defect in the cutting angle of the separators 14 and 15, etc. which are defects that are difficult to perform automatic correction, and it may set an alarm to sound when these defects occur. Therefore, the operator can listen to the alarm and perform manual correction on items for which automatic correction is difficult. To this end, it goes without saying that the vision part 312 may further measure values necessary for determining a defect, as measurement values.

FIG. 2 is a perspective view of a unit cell according to an embodiment of the present invention.

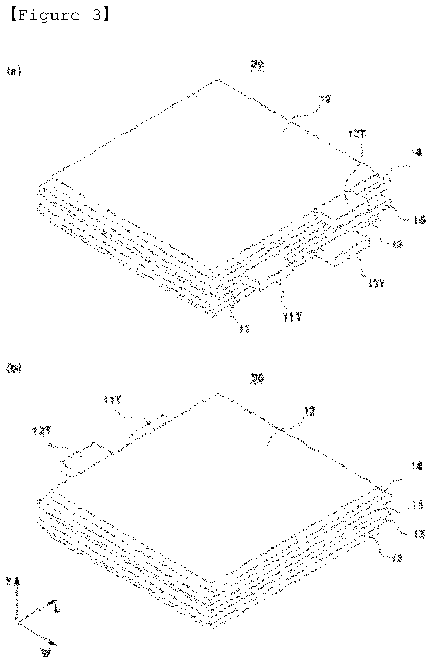

FIG. 3 is a perspective view of a unit cell according to another embodiment of the present invention.

Referring to FIG. 2 and FIG. 3, the unit cell 30 comprises a central electrode 11 having a tab 11T, an upper separator 14 disposed on the upper surface of the central electrode 11, an upper electrode 12 disposed on the upper surface of the upper separator 14 and having the tab 12T, a lower separator 15 disposed on the lower surface of the central electrode 11, and a lower electrode 13 disposed on the lower surface of the lower separator 15 and having the tab 13T. The tabs 11T, 12T, 13T have shapes protruding from one end portion of the electrodes 11, 12, 13.

Each of the upper electrode 12 and the lower electrode 13 may be an electrode having a polarity different from that of the central electrode 11. For example, the central electrode 11 may be a negative electrode, and each of the upper electrode 12 and the lower electrode 13 may be a positive electrode. Alternatively, the central electrode 11 may be a positive electrode, and each of the upper electrode 12 and the lower electrode 13 may be a negative electrode.

Referring to FIG. 2, in the unit cell 30 according to an embodiment of the present invention, the tab 12T of the upper electrode 12 and the tab 13T of the lower electrode 13 are disposed in the opposite direction to the tab 11T of the central electrode 11. Each of the tab 11T of the central electrode 11, the tab 12T of the upper electrode 12, and the tab 13T of the lower electrode 13 may be disposed at the center of one end portion where the tab of the electrode is formed. In addition, when viewed in the widthwise direction W, the tab 12T of the upper electrode 12 and the tab 13T of the lower electrode 13 may be disposed to overlap with the tab 11T of the central electrode 11 in the thickness direction T.

Referring to FIG. 3, in the unit cell 30 according to another embodiment of the present invention, the tab 12T of the upper electrode 12 and the tab 13T of the lower electrode 13 are disposed spaced apart from each other in the same direction as the tab 11T of the central electrode 11. The tab 11T of the central electrode 11 is disposed to be biased toward one side portion of the unit cell 30, and each of the tab 12T of the upper electrode 12 and the tab 13T of the lower electrode 13 may be disposed to be biased toward the other side portion of the unit cell 30. In FIG. 3(a), the tab 11T of the central electrode 11 is disposed to be biased toward the left side portion of the unit cell 30, and each of the tab 12T of the upper electrode 12 and the tab 13T of the lower electrode 13 is shown as being biased toward the right side portion of the unit cell 30, but the tab 11T of the central electrode 11 is disposed to be biased toward the right side portion of the unit cell 30, and also each of the tabs 12T of the upper electrode 12 and the tabs 13T of the lower electrode 13 may be disposed to be biased toward the left side portion of the unit cell 30. The tab 12T of the upper electrode 12 and the tab 13T of the lower electrode 13 may be disposed to overlap each other on a plane.

FIG. 4 is a diagram for explaining the measurement value measured by the vision part in the unit cell of FIG. 2. FIG. 4(a) is a diagram for explaining measurement values of the upper vision part 312T, and FIG. 4(b) is a diagram for explaining measurement values of the lower vision part 312T.

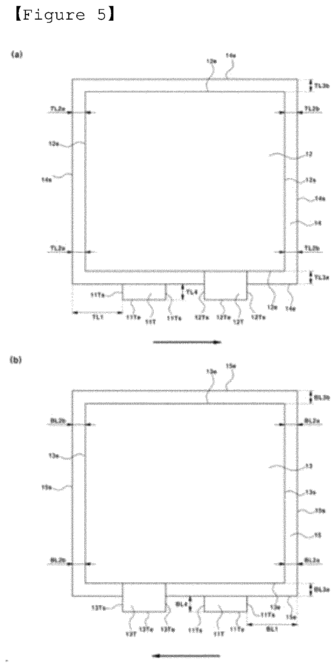

FIG. 5 is a diagram for explaining the measurement value measured by the vision part in the unit cell of FIG. 3. FIG. 5(a) is a diagram for explaining measurement values of the upper vision part 312T, and FIG. 5(b) is a diagram for explaining measurement values of the lower vision part 312T.

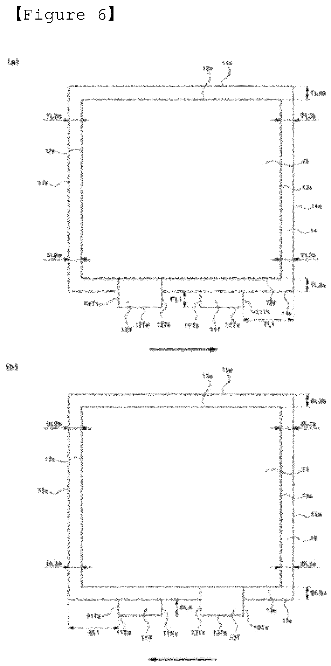

FIG. 6 is a diagram for explaining the measurement value measured by the vision part in a structure in which the unit cell of FIG. 3 is deformed. FIG. 6(a) is a diagram for explaining measurement values of the upper vision part 312T, and FIG. 6(b) is a diagram for explaining measurement values of the lower vision part 312T.

The upper vision part 312T measures at least one of a distance TL1 between one side portion 14s of the upper separator 14 and one side portion 11Ts of the tab 11T of the central electrode 11, distances TL2a, TL2b between both side portions 14s of the upper separator 14 and both side portions 12s of the upper electrode 12, distances TL3a, TL3b between both end portions 14e of the upper separator 14 and both end portions 12e of the upper electrode 12, and a distance TL4 between one end portion 14e of the upper separator 14 and the end portion 11Te of the tab 11T of the central electrode 11. As shown in the figure, the end portion 11Te of the tab 11T of the central electrode 11 refers to an edge region connecting both side portions 11Ts of the tab 11Ts of the central electrode 11. Preferably, the upper vision part 312T measures all of the aforementioned distances. Here, one end portion 14e of the upper separator 14 is an end portion close to the tab 11T of the central electrode 11 among both end portions 14e of the upper separator 14.

Similarly, the lower vision part 312B measures at least one of the distance BL1 between one side portion 15s of the lower separator 15 and one side portion 11Ts of the tab 11T of the central electrode 11, distances BL2a, BL2b between both side portions 15s of the lower separator 15 and both side portions 13s of the lower electrode 13, distances BL3a, BL3b between both end portions 15e of the lower separator 15 and both end portions 13e of the lower electrode 13 and the distance BL4 between one end portion 15e of the lower separator 15 and the end portion 11Te of the tab 11T of the central electrode 11. Preferably, the lower vision part 312B measures all of the aforementioned distances. Here, one end portion 15e of the lower separator 15 is an end portion close to the tab 11T of the central electrode 11 of both end portions 15e of the lower separator 15.

As shown in the figure, the upper vision part 312T may measure the distance TL2a between one side portion 14s of the upper separator 14 and one side portion 12s of the upper electrode 12 in two or more regions and also may measure the distance TL2b between the other side portion 14s of the upper separator 14 and the other side portion 12s of the upper electrode 12 in two or more regions. Similarly, the lower vision part 312B may measure the distance BL2a between one side portion 15s of the lower separator 15 and one side portion 13s of the lower electrode 13 in two or more regions, and also may measure the distance BL2b between the other side portion 15s of the lower separator 15 and the other side portion 13s of the lower electrode 13 in two or more regions. However, the upper vision part 312T may measure the distance TL2a between one side portion 14s of the upper separator 14 and one side portion 12s of the upper electrode 12 in one region, and also may measure the distance TL2b between the other side portion 14s of the upper separator 14 and the other side portion 12s of the upper electrode 12 in one region. Similarly, the lower vision part 312B may measure the distance BL2a between one side portion 15s of the lower separator 15 and one side portion 13s of the lower electrode 13 in one region and also may measure the distance BL2b between one side portion 15s of the lower separator 15 and one side portion 13s of the lower electrode 13 in one region.

Also, the upper vision part 312T may measure the distance TL3a between one end portion 14e of the upper separator 14 and one end portion 12e of the upper electrode 12 in two or more regions, and also may measure the distance TL3b between the other end portion 14e of the upper separator 14 and the other end portion 12e of the upper electrode 12 in two or more regions. Similarly, the lower vision part 312B may measure the distance BL3a between one end portion 15e of the lower separator 15 and one end portion 13e of the lower electrode 13 in two or more regions, and also may measure the distance BL3b between the other end portion 15e of the lower separator 15 and the other end portion 13e of the lower electrode 13 in two or more regions. However, as shown in the figure, the upper vision part 312T may measure the distance TL3a between one end portion 14e of the upper separator 14 and one end portion 12e of the upper electrode 12 in one region, and also may measure the distance TL3b between the other end portion 14e of the upper separator 14 and the other end portion 12e of the upper electrode 12 in one region. Similarly, the lower vision part 312B may measure the distance BL3a between one end portion 15e of the lower separator 15 and one end portion 13e of the lower electrode 13 in one region, and also may measure the distance BL3b between the other end portion 15e of the lower separator 15 and the other end portion 13e of the lower electrode 13 in one region.

If the distance TL1 between one side portion 14s of the upper separator 14 and one side portion 11Ts of the tab 11T of the central electrode 11 measured by the upper vision part 312T and the distance BL1 between one side portion 15s of the lower separator 15 and one side portion 11Ts of the tab 11T of the central electrode 11 measured by the lower vision part 312B is greater than the reference value, the control part 313 may correct the cutting position of the laminate cutting part 212 in a direction from one side portion of the tab 11T of the central electrode 11 toward the other side portion. If the distance TL1 between one side portion 14s of the upper separator 14 and one side portion 11Ts of the tab 11T of the central electrode 11 measured by the upper vision part 312T and the distance BL1 between one side portion 15s of the lower separator 15 and one side portion 11Ts of the tab 11T of the central electrode 11 measured by the lower vision part 312B is smaller than the reference value, the control part 313 may correct the cutting position of the laminate cutting part 212 in a direction from the other side portion of the tab 11T of the central electrode 11 toward one side portion. However, the cutting position of the laminate cutting part 212 may be performed by manual correction by directly inputting the cutting position of the laminate cutting part 212 corrected by the calculated position correction value to the control part 313 by the operator.

If the distance (TL2a, or TL2b) between one side portion 14s of the upper separator 14 and one side portion 12s of the upper electrode 12 measured by the upper vision part 312T is greater than the reference value and the distance (TL2b, or TL2a) between the other side portion 14s of the upper separator 14 and the other side portion 12s of the upper electrode 12 is smaller than the reference value, the control part 313 corrects the upper electrode 12 in a direction from the other side portion of the upper electrode 12 toward one side portion. Similarly, if the distance (BL2a, or BL2b) between one side portion 15s of the lower separator 15 and one side portion 13s of the lower electrode 13 measured by the lower vision part 312B is greater than the reference value, and the distance (BL2b, or BL2a) between the other side portion 15s of the lower separator 15 and the other side portion 13s of the lower electrode 13 is smaller than the reference value, it corrects the lower electrode 13 in the direction from the other side portion of the lower electrode 13 toward one side portion. Here, one side portion refers to the opposite side portion of the other side portion, and the other side portion refers to the opposite side portion of one side portion, and the position of each of one side portion and the other side portion is not determined to be specific position.

If the distance (TL3a, or TL3b) between one end portion 14e of the upper separator 14 and one end portion 12e of the upper electrode 12 measured by the upper vision part 312T is greater than the reference value, and the distance (TL3b, or TL3a) between the other end portion 14e of the upper separator 14 and the other end portion 12e of the upper electrode 12 is smaller than the reference value, the control part 313 corrects the upper electrode 12 in a direction from the other end portion of the upper electrode 12 toward one end portion. Similarly, if the distance (BL3a, or BL3b) between one end portion 15e of the lower separator 15 and one end portion 13e of the lower electrode 13 measured by the lower vision part 312B is greater than the reference value, and the distance (BL3b, or BL3a) between the other end portion 15e of the lower separator 15 and the other end portion 13e of the lower electrode 13 is smaller than the reference value, it corrects the lower electrode 15 in the direction from the other end portion toward one end portion. Here, one end portion refers to the opposite end portion of the other end portion, and the other end portion refers to the opposite end portion of one end portion, and the position of each of one end portion and the other end portion is not determined to be specific position.

If the distance TL4 between one end portion 14e of the upper separator 14 and the end portion 11Te of the tab 11T of the central electrode 11 measured by the upper vision part 312T is greater than the reference value, the control part 313 corrects the position of the central electrode 11 in a direction from one end portion of the upper separator 14 toward the other end portion. If the distance TL4 between one end portion 14e of the upper separator 14 and the end portion 11Te of the tab 11T of the central electrode 11 measured by the upper vision part 312T is smaller than the reference value, it corrects the position of the central electrode 11 in the direction from the other end portion of the upper separator 14 toward one end portion. Similarly, if the distance BL4 between one end portion 15e of the lower separator 15 and the end portion 11Te of the tab 11T of the central electrode 11 measured by the lower vision part 312B is greater than the reference value, it corrects the position of the central electrode 11 in the direction from one end portion of the lower separator 15 toward the other end portion. If the distance BL4 between one end portion 15e of the lower separator 15 and the end portion 11Te of the tab 11T of the central electrode 11 measured by the lower vision part 312B is smaller than the reference value, it corrects the position of the central electrode 11 from the other end portion of the lower separator 15 toward one end portion.

Hereinafter, for each case of FIGS. 4 to 6, the positions of one side portion 14s of the upper separator 14 and one side portion 11Ts of the tab 11T of the central electrode 11 measured by the upper vision part 312T and one side portion 15s of the lower separator 15 and one side portion 11Ts of the tab 11T of the central electrode 11 measured by the lower vision part 312B will be described. The conveying direction of the unit cell 30 is indicated by an arrow in the drawing.

In FIG. 4, one side portions (11Ts, 14s, and 15s) of each of the tab 11T of the central electrode 11, the upper separator 14 and the lower separator 15 may be side portions disposed in a direction opposite to the conveying direction of the unit cell 30. one side portion of each of the tab 11T and the upper separator 14 of the central electrode 11 based on FIG. 4(a) is a side portion disposed on the left side, and one side portion of each of the tab 11T of the central electrode 11 and the lower separator 15 based on FIG 4(b) is a side portion disposed on the right side. Accordingly, based on FIG. 4(a), the upper vision part 312T may measure a distance TL1 between the left side portion 14s of the upper separator 14 and the left side portion 11Ts of the tab 11T of the central electrode 11, and based on FIG. 4(b), the lower vision part 312B can measure the distance BL1 between the right side portion 15s of the lower separator 15 and the right side portion 11Ts of the tab 11T of the central electrode 11.

However, depending on the design, one side portions (11Ts, 14s, 15s) of each of the tab 11T of the central electrode 11, the upper separator 14 and the lower separator 15 may be side portions disposed in the conveying direction of the unit cell 30. Accordingly, based on FIG. 4(a), the upper vision part 312T may measure the distance between the right side portion 14s of the upper separator 14 and the right side portion 11Ts of the tab 11T of the central electrode 11, and based on FIG 4(b), the lower vision part 312B may measure the distance between the left side portion 15s of the lower separator 15 and the left side portion 11Ts of the tab 11T of the central electrode 11. Also, the upper vision part 312T may measure the distance between both side portions 14s of the upper separator 14 and both side portions 11Ts of the tab 11T of the central electrode 11, and the lower vision part 312B may also measure the distance between both side portions 15s of the lower separator 15 and both side portions 11Ts of the tab 11T of the central electrode 11.

In FIG. 5, one side portions 14s, 15s of each of upper separator 14 and lower separator 15 may be side portions close to the tab 11T of the central electrode 11 among both side portions 14s, 15s of each of the upper separator 14 and the lower separator 15. one side portion 11Ts of the tab 11T of the central electrode 11 may be a side portion close to one side portions 14s, 15s of each of the upper separator 14 and the lower separator 15 among both side portions 11Ts of the tab 11T of the central electrode 11. Based on FIG. 5(a), one side portion of each of the tab 11T of the central electrode 11 and the upper separator 14 is a side portion disposed on the left side, and based on FIG. 5(b), one side portion of each of the tab 11T of the central electrode 11 and the lower separator 15 is a side portion disposed on the right side. Therefore, based on FIG. 5(a), the upper vision part 312T may measure the distance TL1 between the left side portion 14s of the upper separator 14 and the left side portion 11Ts of the tab 11T of the central electrode 11, and based on FIG. 5(b), the lower vision part 312B may measure the distance BL1 between the right side portion 15s of the lower separator 15 and the right side portion 11Ts of the tab 11T of the central electrode 11. Through this, it is possible to measure the distance between components to be measured without interference from other components.

Even in FIG 6, one side portions 14s, 15s of each of the upper separator 14 and the lower separator 15 may be side portions close to the tab 11T of the central electrode 11 among both side portions 14s, 15s of each of the upper separator 14 and the lower separator 15. one side portion 11Ts of the tab 11T of the central electrode 11 may be a side portion close to one side portion of each of the upper separator 14 and the lower separator 15 among both side portions 11Ts of the tab 11T of the central electrode 11. Based on FIG. 6(a), one side portion of each of the tab 11T and the upper separator 14 of the central electrode 11 is a side portion disposed on the right side, and based on FIG. 6(b), one side portion of each of the tab 11T and the lower separator 15 of the central electrode 11 is a side portion disposed on the left side. Accordingly, based on FIG. 6(a), the upper vision part 312T may measure the distance TL1 between the right side portion 14s of the upper separator 14 and the right side portion 11Ts of the tab 11T of the central electrode 11, and based on FIG. 6(b), the lower vision part 312B may measure the distance BL1 between the left side portion 15s of the lower separator 15 and the left side portion 11Ts of the tab 11T of the central electrode 11. Through this, it is possible to measure the distance between components to be measured without interference from other components.

The unit cell manufacturing method according to an embodiment of the present invention comprises a step of forming a laminate comprising a central electrode, an upper separator disposed on one side of the central electrode, a lower separator disposed on the other surface of the central electrode, an upper electrode disposed on the upper separator and a lower electrode disposed on the lower separator; a step of forming a unit cell by cutting the upper separator and the lower separator of the laminate; a step of measuring a measurement value comprising the position information of at least one of the central electrode, the upper separator, the lower separator, the upper electrode and the lower electrode in the unit cell; a step of calculating the position correction value of at least one of the central electrode, the upper separator, the lower separator, the upper electrode, and the lower electrode, based on the measurement value; and a step of correcting at least one of the position of the central electrode in the step of forming the laminate, the position of the upper electrode in the step of forming the laminate, the position of the lower electrode in the step of forming the laminate, and the cutting position of the laminate in the step of forming the unit cell.

The description of the unit cell manufacturing device according to an embodiment of the present invention may be applied to the unit cell manufacturing method according to an embodiment of the present invention in substantially the same manner. For example, the step of measuring the measurement value measures the measurement value of each of a plurality of unit cells, and the step of calculating the position correction value may be a step of calculating the position correction value based on an average value of measurement values of each of a plurality of unit cells. Accordingly, a detailed description of the unit cell manufacturing method according to an embodiment of the present invention will be omitted.

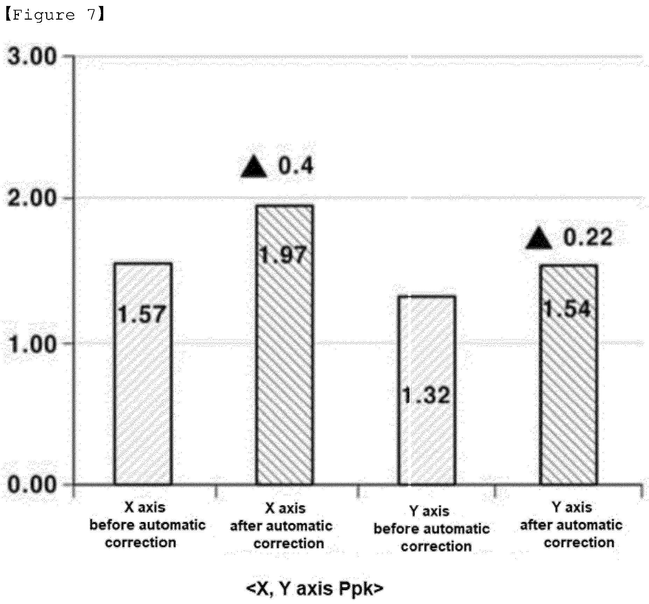

FIG. 7 is a graph showing the process capability index (Ppk) improvement according to the present invention.

The process capability index is the ratio of process capability to specification, and is an index indicating whether a process has sufficient capability to produce a product that meets specifications, and if the process capability index is high, it means that the accuracy of positioning at the center of the upper and lower specification limits is high. The process capability index indicating process capability is Cp, Cpk, Pp, Ppk, etc. and among them, Ppk using the overall standard deviation of the long-term process was measured.

Referring to the graph, it can be seen that when the X-axis automatic correction that is the longitudinal direction L correction was performed through the vision part 312 and the control part 313 of the present invention, the process capability index was increased by 0.4 from 1.57 to 1.97, as compared to the case of performing the manual correction by directly inputting the position correction value obtained by arbitrarily determining by the operator by looking at the alignment state of the unit cell 30, into the control part 313, and when the Y-axis automatic correction, which is the widthwise direction W correction, is performed, the process capability index increased by 0.22 from 1.32 to 1.54, as compared to the case where the manual correction was performed.

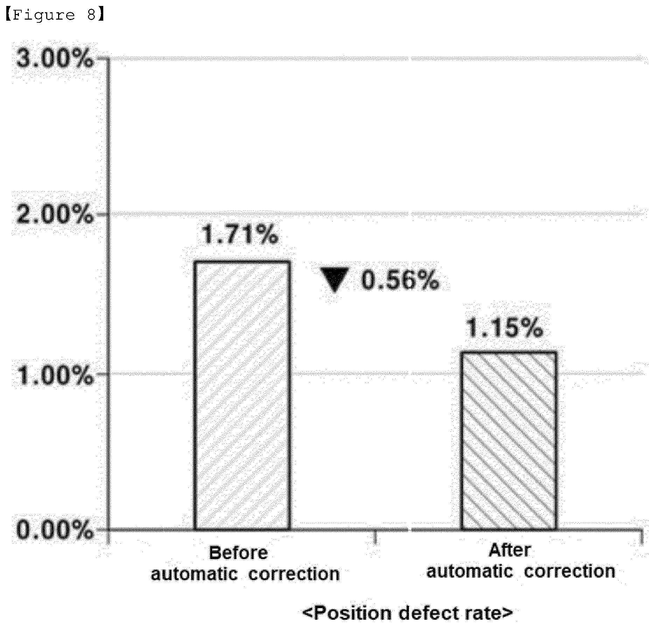

FIG. 8 is a graph showing a decrease in defect rate according to the present invention.

Referring to the graph, it can be seen that when the automatic correction was performed through the vision part 312 and the control part 313 of the present invention, the position defect rate was decreased by 0.56% from 1.71% to 1.15%, as compared to the case of performing the manual correction by directly inputting the position correction value obtained by arbitrarily determining by the operator by looking at the alignment state of the unit cell 30, into the control part 313.

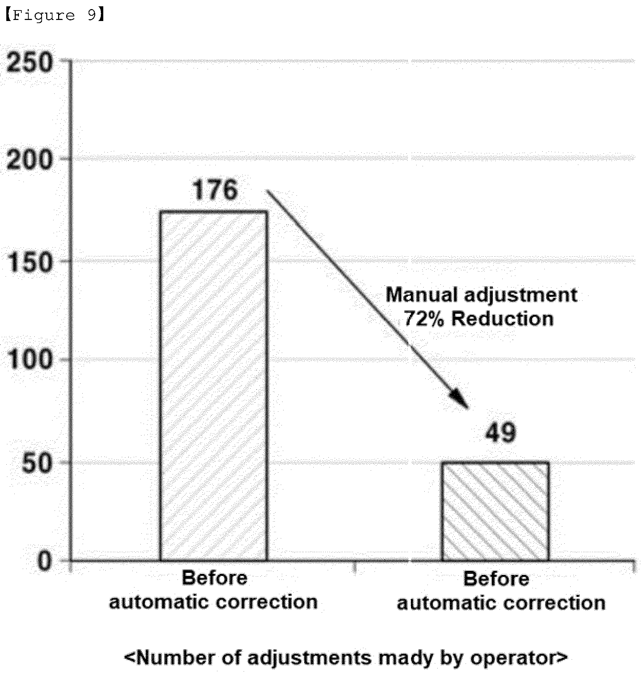

FIG. 9 is a graph showing a decrease in the number of manual corrections of an operator according to the present invention.

Referring to the graph, it can be seen that when automatic correction was performed through the vision part 312 and the control part 313 of the present invention, the number of manual corrections by the operator was reduced by about 72% from 176 times to 49 times during a cycle of one week, as compared to the case of performing the manual correction by directly inputting the position correction value obtained by arbitrarily determining by the operator by looking at the alignment state of the unit cell 30, into the control part 313.

In the case of the manual correction, the control part does not calculate the position correction value based on the position information of each of the plurality of unit cells, but rather the alignment status is identified based on the position information measured by the operator with the vision part of each of the plurality of unit cells or the position information directly checked with the operator's eyes, and thus the position correction value determined by the operator arbitrarily is directly input to the control part. Therefore, in the case of the manual correction, there is a limit that the inputted position correction value is not accurate, and also the position correction value, which is different depending on the operator, is derived and applied. On the other hand, as in the present invention, if the position correction value is calculated by the control part and automatic correction is performed accordingly, and thus it is possible to improve the calculation of the position correction value and the alignment of the unit cell, and it can reduce the effort of the operator.

In the above, an embodiment of the present invention has been described by way of example, but it is not intended to limit the embodiment of the present invention to the above-described embodiment. Those skilled in the art will be able to practice the present invention with appropriate modifications, for example, omit, change, or substitute all or part of the configuration of the present invention, or add other components with reference to the present specification and accompanying drawings, within the scope that does not depart from the scope of the present invention as defined in the appended claims.

In the present specification, terms such as one side portion, other side portion, one end portion, and other end portion are for distinguishing positions from each other, and do not mean absolute positions. one side portion referred to in one part of this specification may be referred to as the other side portion in another part of this specification. Similarly, one end portion referred to in one portion of this specification may be referred to as the other end portion in another portion of this specification.

In the present specification, the order numbers of the first, the second, etc. are for distinguishing the components from each other, and does not mean a priority order between components or an absolute order number. The first element in one part of this specification may be referred to as the second element in other parts of this specification.

The terms and expressions herein should be interpreted broadly and not in a limiting sense. The expression 'comprising' as used herein does not exclude the presence or addition of one or more other components other than the stated components. In this specification, expressions in the singular include the plural, unless the context explicitly excludes otherwise. In addition, each of the embodiments can be combined with each other, and unless contradicted, the content described in a specific embodiment may also be applied to other embodiments.

### [Description of Symbol]

11: Central electrode
12: Upper electrode
13: Lower electrode
14: Upper separator
15: Lower separator
111: Central electrode conveying part
112: Central electrode cutting part
121: Upper electrode conveying part
122: Upper electrode cutting part
131: Lower electrode conveying part
132: Lower electrode cutting part
20: Laminate
211: Laminate conveying part
212: Laminate cutting part
213: Lamination part
311: Init cell conveying part
312: Vision part
313: Control part

## Claims

1. A unit cell manufacturing device, comprising:
a laminate conveying part (211) for conveying a laminate (20) comprising a central electrode (11), an upper separator (14) disposed on a first surface of the central electrode (11), a lower separator (15) disposed on a second surface of the central electrode (11), an upper electrode (12) disposed on the upper separator (14) and a lower electrode (13) disposed on the lower separator (15);
a central electrode conveying part (111) for supplying the central electrode (11) to the laminate conveying part (211);
an upper electrode conveying part (121) for supplying the upper electrode (12) to the laminate conveying part (211);
a lower electrode conveying part (131) for supplying the lower electrode (13) to the laminate conveying part (211);
a laminate cutting part (212) that is configured to form a unit cell by cutting the upper separator (14) and the lower separator (15) of the laminate (20);
a vision part (312) for measuring a measurement value comprising position information of at least one of the central electrode (11), the upper separator (14), the lower separator (15), the upper electrode (12), or the lower electrode (13) of the unit cell; and
a control part for calculating a position correction value of the at least one of the central electrode (11), the upper separator (14), the lower separator (15), the upper electrode (12), or the lower electrode (13), based on the measurement value, and for correcting at least one of a position of the central electrode (11) supplied to the laminate conveying part (211), a position of the upper electrode (12) supplied to the laminate conveying part (211), a position of the lower electrode (13) supplied to the laminate conveying part (211), or a cutting position of the laminate cutting part (212), based on the position correction value,
wherein the vision part (312) comprises at least one of an upper vision part (312T) disposed adjacent to the upper electrode (12) of the unit cell and a lower vision part (312B) disposed adjacent to the lower electrode (13) of the unit cell,
the upper vision part (312T) is configured to measure at least one of a distance between a first side portion of the upper separator (14) and a first side portion of a tab of the central electrode (11), a distance between the first side portion and a second side portion of the upper separator (14) and first and second side portions of the upper electrode (12), respectively, a distance between first and second end portions of the upper separator (14) and first and second end portions of the upper electrode (12), or a distance between one of the end portions of the upper separator (14) and an end portion of the tab of the central electrode (11),
the lower vision part (312B) is configured to measure at least one of a distance between a first side portion of the lower separator (15) and a first side portion of the tab of the central electrode (11), a distance between the first side portion and a second side portion of the lower separator (15) and first and second side portions of the lower electrode (13), respectively, a distance between first and second end portions of the lower separator (15) and first and second end portions of the lower electrode (13), or a distance between one of the end portions of the lower separator (15) and the end portion of the tab of the central electrode (11), and
one of the end portions of each of the upper separator (14) and the lower separator (15) is closer to the tab of the central electrode (11) than another one of the end portions of each of the upper separator (14) and the lower separator (15).

2. The unit cell manufacturing device according to claim 1, wherein the tab of the upper electrode (12) and the tab of the lower electrode (13) are disposed in an opposite direction relative to the tab of the central electrode (11), and
one side portion of each of the tab of the central electrode (11), the upper separator (14) and the lower separator (15) is disposed in a direction opposite to a conveying direction of the unit cell relative to another one of the side portions of each of the tab of the central electrode (11), the upper separator (14) and the lower separator (15).

3. The unit cell manufacturing device according to claim 2, wherein the tab of the upper electrode (12) and the tab of the lower electrode (13) are spaced apart from each other in a same direction as the tab of the central electrode (11),
one side portion of each of the upper separator (14) and the lower separator (15) is closer to the tab of the central electrode (11) than another one of the side portions of each of the upper separator (14) and the lower separator (15), and
one side portion of the tab of the central electrode (11) is closer to one side portion of each of the upper separator (14) and the lower separator (15) than another one of the side portions of the tab of the central electrode (11).

4. The unit cell manufacturing device according to claim 1, wherein when a conveying direction of each of the central electrode (11), the upper electrode (12) and the lower electrode (13) is a longitudinal direction, and a direction perpendicular to the longitudinal direction on a plane is a widthwise direction, the control part is configured to correct the position of the central electrode (11) in the widthwise direction and is configured to correct the position of each of the upper electrode (12) and the lower electrode (13) in the longitudinal direction and the widthwise direction.

5. The unit cell manufacturing device according to claim 4, wherein the control part is configured to correct the position of each of the upper electrode (12) and the lower electrode (13) in the longitudinal direction by adjusting the speed of each of the upper electrode (12) and the lower electrode (13) supplied to the laminate conveying part (211).

6. The unit cell manufacturing device according to claim 4, wherein the control part is configured to correct the position of each of the central electrode (11), the upper electrode (12) and the lower electrode (13) in the widthwise direction by adjusting the position of the Edge Position Control (EPC) sensor measuring the position of at least one of both end portions of each of the central electrode (11), the upper electrode (12) and the lower electrode (13).

7. The unit cell manufacturing device according to claim 1, wherein the control part is configured such that if the distance between one side portion of the upper separator (14) and one side portion of the tab of the central electrode (11) measured by the upper vision part (312T) and the distance between one side portion of the lower separator (15) measured by the lower vision part (312B) and one side portion of the tab of the central electrode (11) is greater than the reference value, the control part corrects the cutting position of the laminate cutting part (212) in a direction from one side portion of the tab of the central electrode (11) toward the other side portion, and the control part is configured such that if the distance between one side portion of the upper separator (14) and one side portion of the tab of the central electrode (11) measured by the upper vision part (312T) and the distance between one side portion of the lower separator (15) measured by the lower vision part (312B) and one side portion of the tab of the central electrode (11) is smaller than the reference value, the control part corrects the cutting position of the laminate cutting part (212) in a direction from the other side portion of the tab of the central electrode (11) toward one side portion.

8. The unit cell manufacturing device according to claim 1, wherein the control part is configured such that if the distance between one side portion of the upper separator (14) and one side portion of the upper electrode (12) measured by the upper vision part (312T) is greater than a reference value and the distance between the other side portion of the upper separator (14) and the other side portion of the upper electrode (12) is smaller than the reference value, the control part corrects the upper electrode (12) in a direction from the other side portion of the upper electrode (12) toward one side portion,
the control part is configured such that if the distance between one side portion of the lower separator (15) and one side portion of the lower electrode (13) measured by the lower vision part (312B) is greater than the reference value and the distance between the other side portion of the lower separator (15) and the other side portion of the lower electrode (13) is smaller than the reference value, the control part corrects the lower electrode (13) in a direction from the other side portion toward one side portion,
the control part is configured such that if the distance between one end portion of the upper separator and one end portion of the upper electrode (12) measured by the upper vision part (312T) is greater than the reference value and the distance between the other end portion of the upper separator (14) and the other end portion of the upper electrode (12) is smaller than the reference value, the control part corrects the upper electrode (12) in a direction from the other end portion of the upper electrode (12) toward one end portion, and
the control part is configured such that if the distance between one end portion of the lower separator (15) and one end portion of the lower electrode (13) measured by the lower vision part (312B) is greater than the reference value and the distance between the other end portion of the lower separator (15) and the other end portion of the lower electrode (13) is smaller than the reference value, the control part corrects the lower electrode (13) in a direction from the other end portion of the lower electrode (13) toward one end portion.

9. The unit cell manufacturing device according to claim 1, wherein the control part is configured such that if the distance between one end portion of the upper separator (14) and the end portion of the tab of the central electrode (11) measured by the upper vision part (312T) is greater than the reference value, the control part corrects the position of the central electrode (11) in a direction from one end portion of the upper separator toward the other end portion, and the control part is configured such that if the distance between one end portion of the upper separator (14) and the end portion of the tab of the central electrode (11) measured by the upper vision part (312T) is smaller than the reference value, the control part corrects the position of the central electrode (11) in a direction from the other end portion of the upper separator (14) toward one end portion, and
the control part is configured such that if the distance between one end portion of the lower separator (15) and the end portion of the tab of the central electrode (11) measured by the lower vision part (312B) is greater than the reference value, the control part corrects the position of the central electrode (11) in a direction from one end portion of the lower separator (15) toward the other end portion, and the control part is configured such that if the distance between one end portion of the lower separator (15) and the end portion of the tab of the central electrode (11) measured by the lower vision part (312B) is smaller than the reference value, the control part corrects the position of the central electrode (11) in a direction from the other end portion of the lower separator (15) toward one end portion.

10. The unit cell manufacturing device according to claim 1, wherein the vision part (312) is configured to measure the measurement value of each of a plurality of unit cells, and the control part is configured to calculate the position correction value based on the average value of the measurement values of each of a plurality of unit cells.

11. The unit cell manufacturing device according to claim 10, wherein the control part is configured to set at least one of the number of a plurality of unit cells used in the calculation of the position correction value, the position correction value at which correction is started, the percentage of the actual position correction value to the position correction value, the first Programmable Logic Controller (PLC) transmission cycle and the second PLC transmission cycle to transmit the position correction value to the PLC, and the cycle to which the second PLC transmission cycle is applied,
the second PLC transmission cycle is a cycle which is applied immediately after the type of the unit cell is replaced, and
the first PLC transmission cycle is a cycle which is applied after the second PLC transmission cycle is applied during a cycle to apply the second PLC transmission cycle.

12. The unit cell manufacturing device according to claim 10, wherein the control part is configured such that when calculating the position correction value, the control part excludes at least one of a measurement value outside the reference range among the measurement values of the n^{th} unit cell and a measurement value having a difference equal to or greater than the reference value from the measurement value of the n-1^{th} unit cell, from the measurement values that are the basis of the calculation.

13. A unit cell manufacturing method, comprising:
forming a laminate (20) containing a central electrode (11), an upper separator (14) disposed on a first surface of the central electrode (11), a lower separator (15) disposed on a second surface of the central electrode (11), an upper electrode (12) disposed on the upper separator (14) and a lower electrode (13) disposed on the lower separator (15);
forming a unit cell by cutting the upper separator (14) and the lower separator (15) of the laminate (20);
measuring a measurement value comprising position information of at least one of the central electrode (11), the upper separator (14), the lower separator (15), the upper electrode (12), or the lower electrode (13) of the unit cell;
calculating a position correction value of the at least one of the central electrode (11), the upper separator (14), the lower separator (15), the upper electrode (12), or the lower electrode (13), based on the measurement value; and
correcting at least one of the position of the central electrode (11) in the step of forming the laminate (20), the position of the upper electrode (12) in the step of forming the laminate (20), the position of the lower electrode (13) in the step of forming the laminate (20), or the cutting position of the laminate (20) in the step of forming the unit cell, based on the position correction value.

14. The unit cell manufacturing method according to claim 13, wherein the measuring of the measurement value includes measuring the measurement value of each of a plurality of unit cells, and
the calculating of the position correction value is based on the average value of the measurement values of each of the plurality of unit cells.

## Patentansprüche

1. Einheitszellen-Herstellungsvorrichtung, umfassend:
einen Laminat-Führungsteil (211) zum Führen eines Laminats (20), welches eine zentrale Elektrode (11), einen oberen Separator (14), welche an einer ersten Fläche der zentralen Elektrode (11) angeordnet ist, einen unteren Separator (15), welcher an einer zweiten Fläche der zentralen Elektrode (11) angeordnet ist, eine obere Elektrode (12), welche an dem oberen Separator (14) angeordnet ist, und eine untere Elektrode (13) umfasst, welche an dem unteren Separator (15) angeordnet ist;
einen zentralen Elektroden-Führungsteil (111) zum Zuführen der zentralen Elektrode (11) zu dem Laminat-Führungsteil (211);
einen oberen Elektroden-Führungsteil (121) zum Zuführen der oberen Elektrode (12) zu dem Laminat-Führungsteil (211);
einen unteren Elektroden-Führungsteil (131) zum Zuführen der unteren Elektrode (13) zu dem Laminat-Führungsteil (211);
einen Laminat-Schneideteil (212), welcher dazu eingerichtet ist, eine Einheitszelle durch Schneiden des oberen Separators (14) und des unteren Separators (15) des Laminats (20) zu bilden;
einen Sichtteil (312) zum Messen eines Messwerts, welcher Positionsinformationen von wenigstens einem aus der zentralen Elektrode (11), dem oberen Separator (14), dem unteren Separator (15), der oberen Elektrode (12) oder der unteren Elektrode (13) der Einheitszelle umfasst; und
einen Steuerteil zum Berechnen eines Position-Korrekturwerts des wenigstens einen aus der zentralen Elektrode (11), dem oberen Separator (14), dem unteren Separator (15), der oberen Elektrode (12) oder der unteren Elektrode (13) auf Grundlage des Messwerts, und zum Korrigieren von wenigstens einem aus einer Position der zentralen Elektrode (11), welche zu dem Laminat-Führungsteil (211) zugeführt wird, einer Position der oberen Elektrode (12), welche zu dem Laminat-Führungsteil (211) zugeführt wird, einer Position der unteren Elektrode (13), welche zu dem Laminat-Führungsteil (211) zugeführt wird, oder einer Schneideposition des Laminat-Schneideteils (212) auf Grundlage des Position-Korrekturwerts,
wobei der Sichtteil (312) wenigstens eines aus einem oberen Sichtteil (312T), welcher benachbart zu der oberen Elektrode (12) der Einheitszelle angeordnet ist, und einem unteren Sichtteil (312B) umfasst, welcher benachbart zu der unteren Elektrode (13) der Einheitszelle angeordnet ist,
der obere Sichtteil (312T) dazu eingerichtet ist, wenigstens eines aus einer Distanz zwischen einem ersten Seitenabschnitt des oberen Separators (14) und einem ersten Seitenabschnitt eines Streifens der zentralen Elektrode (11), eine Distanz zwischen dem ersten Seitenabschnitt und dem zweiten Seitenabschnitt des oberen Separators (14) und ersten bzw. zweiten Seitenabschnitten der oberen Elektrode (12), eine Distanz zwischen ersten und zweiten Endabschnitten des oberen Separators (14) und ersten und zweiten Endabschnitten der oberen Elektrode (12) oder eine Distanz zwischen einem der Endabschnitte des oberen Separators (14) und einem Endabschnitt des Streifens der zentralen Elektrode (11) zu messen, der untere Sichtteil (312B) dazu eingerichtet ist, wenigstens eines aus einer Distanz zwischen einem ersten Seitenabschnitt des unteren Separators (15) und einem ersten Seitenabschnitt des Streifens der zentralen Elektrode (11), eine Distanz zwischen dem ersten Seitenabschnitt und einem zweiten Seitenabschnitt des unteren Separators (15) und ersten bzw. zweiten Seitenabschnitten der unteren Elektrode (13), eine Distanz zwischen ersten und zweiten Endabschnitten des unteren Separators (15) und ersten und zweiten Endabschnitten der unteren Elektrode (13) oder eine Distanz zwischen einem der Endabschnitte des unteren Separators (15) und dem Endabschnitt des Streifens der zentralen Elektrode (11) zu messen, und
einer der Endabschnitte von jedem aus dem oberen Separator (14) und dem unteren Separator (15) näher zu dem Streifen der zentralen Elektrode (11) ist als ein anderer der Endabschnitte von jedem aus dem oberen Separator (14) und dem unteren Separator (15).

2. Einheitszellen-Herstellungsvorrichtung nach Anspruch 1, wobei der Streifen der oberen Elektrode (12) und der Streifen der unteren Elektrode (13) in einer entgegengesetzten Richtung relativ zu dem Streifen der zentralen Elektrode (11) angeordnet sind, und
ein Seitenabschnitt von jedem aus dem Streifen der zentralen Elektrode (11), dem oberen Separator (14) und dem unteren Separator (15) in einer Richtung entgegengesetzt zu einer Führungsrichtung der Einheitszelle relativ zu einem anderen der Seitenabschnitte von jedem aus dem Streifen der zentralen Elektrode (11), dem oberen Separator (14) und dem unteren Separator (15) angeordnet ist.

3. Einheitszellen-Herstellungsvorrichtung nach Anspruch 2, wobei der Streifen der oberen Elektrode (12) und der Streifen der unteren Elektrode (13) voneinander in einer selben Richtung wie der Streifen der zentralen Elektrode (11) beabstandet sind,
ein Seitenabschnitt von jedem aus dem oberen Separator (14) und dem unteren Separator (15) näher zu dem Streifen der zentralen Elektrode (11) als ein anderer der Seitenabschnitte von jedem aus dem oberen Separator (14) und dem unteren Separator (15) ist, und
ein Seitenabschnitt des Streifens der zentralen Elektrode (11) näher zu einem Seitenabschnitt von jedem aus dem oberen Separator (14) und dem unteren Separator (15) ist als ein anderer der Seitenabschnitte des Streifens der zentralen Elektrode (11).

4. Einheitszellen-Herstellungsvorrichtung nach Anspruch 1, wobei, wenn eine Führungsrichtung von jeder aus der zentralen Elektrode (11), der oberen Elektrode (12) und der unteren Elektrode (13) eine longitudinale Richtung ist und eine Richtung senkrecht zu der longitudinalen Richtung an einer Ebene eine Breitenrichtung ist, der Steuerteil dazu eingerichtet ist, die Position der zentralen Elektrode (11) in der Breitenrichtung zu korrigieren, und dazu eingerichtet ist, die Position von jeder aus der oberen Elektrode (12) und der unteren Elektrode (13) in der longitudinalen Richtung und der Breitenrichtung zu korrigieren.

5. Einheitszellen-Herstellungsvorrichtung nach Anspruch 4, wobei der Steuerteil dazu eingerichtet ist, die Position von jeder aus der oberen Elektrode (12) und der unteren Elektrode (13) in der longitudinalen Richtung durch Anpassen der Geschwindigkeit von jeder aus der oberen Elektrode (12) und der unteren Elektrode (13) zu korrigieren, welche zu dem Laminat-Führungsteil (211) zugeführt werden.

6. Einheitszellen-Herstellungsvorrichtung nach Anspruch 4, wobei der Steuerteil dazu eingerichtet ist, die Position von jeder aus der zentralen Elektrode (11), der oberen Elektrode (12) und der unteren Elektrode (13) in der Breitenrichtung durch Anpassen der Position des Randpositionsteuerung (EPC)-Sensors zu korrigieren, welcher die Position von wenigstens einem von beiden Endabschnitten von jeder aus der zentralen Elektrode (11), der oberen Elektrode (12) und der unteren Elektrode (13) misst.

7. Einheitszellen-Herstellungsvorrichtung nach Anspruch 1, wobei der Steuerteil derart eingerichtet ist, dass, wenn die Distanz zwischen einem Seitenabschnitt des oberen Separators (14) und einem Seitenabschnitt des Streifens der zentralen Elektrode (11), welche von dem oberen Sichtteil (312T) gemessen wird, und die Distanz zwischen einem Seitenabschnitt des unteren Separators (15), welcher von dem oberen Sichtteil (312B) gemessen wird, und einem Seitenabschnitt des Streifens der zentralen Elektrode (11) größer als der Referenzwert ist, der Steuerteil die Schneidposition des Laminat-Schneideteils (212) in einer Richtung von einem Seitenabschnitt des Streifens der zentralen Elektrode (11) in Richtung des anderen Seitenabschnitts korrigiert, und der Steuerteil derart eingerichtet ist, dass, wenn die Distanz zwischen einem Seitenabschnitt des oberen Separators (14) und einem Seitenabschnitt des Streifens der zentralen Elektrode (11), welche von dem oberen Sichtteil (312T) gemessen wird, und die Distanz zwischen einem Seitenabschnitt des unteren Separators (15), welcher von dem unteren Sichtteil (312B) gemessen wird, und einem Seitenabschnitt des Streifens der zentralen Elektrode (11) kleiner als der Referenzwert ist, der Steuerteil die Schneideposition des Laminat-Schneideteils (212) in einer Richtung von dem anderen Seitenabschnitt des Streifens der zentralen Elektrode (11) in Richtung eines Seitenabschnitts korrigiert.

8. Einheitszellen-Herstellungsvorrichtung nach Anspruch 1, wobei der Steuerteil derart eingerichtet ist, dass, wenn die Distanz zwischen einem Seitenabschnitt des oberen Separators (14) und einem Seitenabschnitt der oberen Elektrode (12), welche von dem oberen Sichtteil (312T) gemessen wird, größer als ein Referenzwert ist, und die Distanz zwischen dem anderen Seitenabschnitt des oberen Separators (14) und dem anderen Seitenabschnitt der oberen Elektrode (12) kleiner als der Referenzwert ist, der Steuerteil die obere Elektrode (12) in eine Richtung von dem anderen Seitenabschnitt der oberen Elektrode (12) in Richtung eines Seitenabschnitts korrigiert,
der Steuerteil derart eingerichtet ist, dass, wenn die Distanz zwischen einem Seitenabschnitt des unteren Separators (15) und einem Seitenabschnitt der unteren Elektrode (13), welche von dem unteren Sichtteil (312B) gemessen wird, größer als der Referenzwert ist, und die Distanz zwischen dem anderen Seitenabschnitt des unteren Separators (15) und dem anderen Seitenabschnitt der unteren Elektrode (13) kleiner als der Referenzwert ist, der Steuerteil die untere Elektrode (13) in eine Richtung von dem anderen Seitenabschnitt in Richtung eines Seitenabschnitts korrigiert,
der Steuerteil derart eingerichtet ist, dass, wenn die Distanz zwischen einem Endabschnitt des oberen Separators und einem Endabschnitt der oberen Elektrode (12), welche von dem oberen Sichtteil (312T) gemessen wird, größer als der Referenzwert ist, und die Distanz zwischen dem anderen Endabschnitt des oberen Separators (14) und dem anderen Endabschnitt der oberen Elektrode (12) kleiner als der Referenzwert ist, der Steuerteil die obere Elektrode (12) in eine Richtung von dem anderen Endabschnitt der oberen Elektrode (12) in Richtung eines Endabschnitts korrigiert, und
der Steuerteil derart eingerichtet ist, dass, wenn die Distanz zwischen einem Endabschnitt des unteren Separators (15) und einem Endabschnitt der unteren Elektrode (13), welche von dem unteren Sichtteil (312B) gemessen wird, größer als der Referenzwert ist, und die Distanz zwischen dem anderen Endabschnitt des unteren Separators (15) und dem anderen Endabschnitt der unteren Elektrode (13) kleiner als der Referenzwert ist, der Steuerteil die untere Elektrode (13) in eine Richtung von dem anderen Endabschnitt der unteren Elektrode (13) in Richtung eines Endabschnitts korrigiert.

9. Einheitszellen-Herstellungsvorrichtung nach Anspruch 1, wobei der Steuerteil derart eingerichtet ist, dass, wenn die Distanz zwischen einem Endabschnitt des oberen Separators (14) und dem Endabschnitt des Streifens der zentralen Elektrode (11), welche von dem oberen Sichtteil (312T) gemessen wird, größer als der Referenzwert ist, der Steuerteil die Position der zentralen Elektrode (11) in eine Richtung von einem Endabschnitt des oberen Separators in Richtung des anderen Endabschnitts korrigiert, und der Steuerteil derart eingerichtet ist, dass, wenn die Distanz zwischen einem Endabschnitt des oberen Separators (14) und dem Endabschnitt des Streifens der zentralen Elektrode (11), welche von dem oberen Sichtteil (312T) gemessen wird, kleiner als der Referenzwert ist, der Steuerteil die Position der zentralen Elektrode (11) in eine Richtung von dem anderen Endabschnitt des oberen Separators (14) in Richtung eines Endabschnitts korrigiert, und
der Steuerteil derart eingerichtet ist, dass, wenn die Distanz zwischen einem Endabschnitt des unteren Separators (15) und dem Endabschnitt des Streifens der zentralen Elektrode (11), welche von dem unteren Sichtteil (312B) gemessen wird, größer als der Referenzwert ist, der Steuerteil die Position der zentralen Elektrode (11) in eine Richtung von einem Endabschnitt des unteren Separators (15) in Richtung des anderen Endabschnitts korrigiert, und der Steuerteil derart eingerichtet ist, dass, wenn die Distanz zwischen einem Endabschnitt des unteren Separators (15) und dem Endabschnitt des Streifens der zentralen Elektrode (11), welche von dem unteren Sichtteil (312B) gemessen wird, kleiner als der Referenzwert ist, der Steuerteil die Position der zentralen Elektrode (11) in eine Richtung von dem anderen Endabschnitt des unteren Separators (15) in Richtung eines Endabschnitts korrigiert.

10. Einheitszellen-Herstellungsvorrichtung nach Anspruch 1, wobei der Sichtteil (312) dazu eingerichtet ist, den Messwert von jeder aus einer Mehrzahl von Einheitszellen zu messen, und der Steuerteil dazu eingerichtet ist, den Position-Korrekturwert auf Grundlage des Durchschnittswerts der Messwerte von jeder aus einer Mehrzahl von Einheitszellen zu berechnen.

11. Einheitszellen-Herstellungsvorrichtung nach Anspruch 10, wobei der Steuerteil dazu eingerichtet ist, wenigstens eines aus der Anzahl einer Mehrzahl von Einheitszellen, welche in der Berechnung des Position-Korrekturwerts verwendet werden, dem Position-Korrekturwert, bei welchem eine Korrektur gestartet wird, dem Anteil des tatsächlichen Position-Korrekturwerts an dem Position-Korrekturwert, dem ersten programmierbaren logischen Steuerelement (PLC)-Übertragungszyklus und dem zweiten PLC-Übertragungszyklus zu setzen, um den Position-Korrekturwert zu dem PLC zu übertragen, sowie den Zyklus, auf welchen der zweite PLC-Übertragungszyklus angewendet wird,
der zweite PLC-Übertragungszyklus ein Zyklus ist, welcher unmittelbar angewendet wird, nachdem der Typ der Einheitszelle ersetzt wird, und
der erste PLC-Übertragungszyklus ein Zyklus ist, welcher angewendet wird, nachdem der zweite PLC-Übertragungszyklus während eines Zyklus angewendet wird, um den zweiten PLC-Übertragungszyklus anzuwenden.

12. Einheitszellen-Herstellungsvorrichtung nach Anspruch 10, wobei der Steuerteil derart eingerichtet ist, dass, wenn der Position-Korrekturwert berechnet wird, der Steuerteil wenigstens einen aus einem Messwert außerhalb des Referenzbereichs unter den Messwerten der n-ten Einheitszelle und einem Messwert ausschließt, welcher eine Differenz gleich oder größer als der Referenzwert von dem Messwert der n-1-ten Einheitszelle aufweist, von den Messwerten, welche die Basis der Berechnung sind.

13. Einheitszellen-Herstellungsverfahren, umfassend:
Bilden eines Laminats (20), welches eine zentrale Elektrode (11), einen oberen Separator (14), welche an einer ersten Fläche der zentralen Elektrode (11) angeordnet ist, einen unteren Separator (15), welcher an einer zweiten Fläche der zentralen Elektrode (11) angeordnet ist, eine obere Elektrode (12), welche an dem oberen Separator (14) angeordnet ist, und eine untere Elektrode (13) umfasst, welche an dem unteren Separator (15) angeordnet ist;
Bilden einer Einheitszelle durch Schneiden des oberen Separators (14) und des unteren Separators (15) des Laminats (20);
Messen eines Messwerts, welcher Positionsinformationen von wenigstens einem aus der zentralen Elektrode (11), dem oberen Separator (14), dem unteren Separator (15), der oberen Elektrode (12) oder der unteren Elektrode (13) der Einheitszelle umfasst;
Berechnen eines Position-Korrekturwerts des wenigstens einen aus der zentralen Elektrode (11), dem oberen Separator (14), dem unteren Separator (15), der oberen Elektrode (12) oder der unteren Elektrode (13) auf Grundlage des Messwerts; und
Korrigieren von wenigstens einem aus der Position der zentralen Elektrode (11) in dem Schritt des Bildens des Laminats (20), der Position der oberen Elektrode (12) in dem Schritt des Bildens des Laminats (20), der Position der unteren Elektrode (13) in dem Schritt des Bildens des Laminats (20) oder der Schneideposition des Laminats (20) in dem Schritt des Bildens der Einheitszelle auf Grundlage des Position-Korrekturwerts.

14. Einheitszellen-Herstellungsverfahren nach Anspruch 13, wobei das Messen des Messwerts ein Messen des Messwerts von jeder aus einer Mehrzahl von Einheitszellen umfasst, und
das Berechnen des Position-Korrekturwerts auf dem durchschnittlichen Wert der Messwerte von jeder aus der Mehrzahl von Einheitszellen basiert.

## Revendications

1. Dispositif de fabrication de cellule unitaire, comprenant :
une partie de transport de stratifié (211) permettant de transporter un stratifié (20) comprenant une électrode centrale (11), un séparateur supérieur (14) disposé sur une première surface de l'électrode centrale (11), un séparateur inférieur (15) disposé sur une seconde surface de l'électrode centrale (11), une électrode supérieure (12) disposée sur le séparateur supérieur (14) et une électrode inférieure (13) disposée sur le séparateur inférieur (15) ;
une partie de transport d'électrode centrale (111) permettant de fournir l'électrode centrale (11) à la partie de transport de stratifié (211) ;
une partie de transport d'électrode supérieure (121) permettant de fournir l'électrode supérieure (12) à la partie de transport de stratifié (211) ;
une partie de transport d'électrode inférieure (131) permettant de fournir l'électrode inférieure (13) à la partie de transport de stratifié (211) ;
une partie de coupe de stratifié (212) qui est configurée pour former une cellule unitaire en coupant le séparateur supérieur (14) et le séparateur inférieur (15) du stratifié (20) ;
une partie de vision (312) permettant de mesurer une valeur de mesure comprenant des informations de position de l'électrode centrale (11) et/ou du séparateur supérieur (14) et/ou du séparateur inférieur (15) et/ou de l'électrode supérieure (12) et/ou de l'électrode inférieure (13) de la cellule unitaire ; et
une partie de commande permettant de calculer une valeur de correction de position de l'électrode centrale (11) et/ou du séparateur supérieur (14) et/ou du séparateur inférieur (15) et/ou de l'électrode supérieure (12) et/ou de l'électrode inférieure (13), sur la base de la valeur de mesure, et permettant de corriger au moins l'une d'une position de l'électrode centrale (11) fournie à la partie de transport de stratifié (211), d'une position de l'électrode supérieure (12) fournie à la partie de transport de stratifié (211), d'une position de l'électrode inférieure (13) fournie à la partie de transport de stratifié (211), ou d'une position de coupe de la partie de coupe de stratifié (212), sur la base de la valeur de correction de position,
dans lequel la partie de vision (312) comprend au moins l'une d'une partie de vision supérieure (312T) disposée adjacente à l'électrode supérieure (12) de la cellule unitaire et d'une partie de vision inférieure (312B) disposée adjacente à l'électrode inférieure (13) de la cellule unitaire,
la partie supérieure de vision (312T) est configurée pour mesurer au moins l'une d'une distance entre une première portion latérale du séparateur supérieur (14) et une première portion latérale d'une languette de l'électrode centrale (11), d'une distance entre la première portion latérale et une seconde portion latérale du séparateur supérieur (14), ainsi que les première et seconde portions latérales de l'électrode supérieure (12), respectivement, d'une distance entre des première et seconde portions d'extrémité du séparateur supérieur (14) et des première et seconde portions d'extrémité de l'électrode supérieure (12), ou d'une distance entre l'une des portions d'extrémité du séparateur supérieur (14) et d'une portion d'extrémité de la languette de l'électrode centrale (11),
la partie de vision inférieure (312B) est configurée pour mesurer au moins l'une d'une distance entre une première portion latérale du séparateur inférieur (15) et une première portion latérale de la languette de l'électrode centrale (11), d'une distance entre la première portion latérale et une seconde portion latérale du séparateur inférieur (15) et des première et seconde portions latérales de l'électrode inférieure (13), respectivement, d'une distance entre des première et seconde portions d'extrémité du séparateur inférieur (15) et des première et seconde portions d'extrémité de l'électrode inférieure (13), ou d'une distance entre l'une des portions d'extrémité du séparateur inférieur (15) et la portion d'extrémité de la languette de l'électrode centrale (11), et l'une des portions d'extrémité de chacun du séparateur supérieur (14) et du séparateur inférieur (15) est plus proche de la languette de l'électrode centrale (11) qu'une autre des portions d'extrémité de chacun du séparateur supérieur (14) et du séparateur inférieur (15).

2. Dispositif de fabrication de cellule unitaire selon la revendication 1, dans lequel la languette de l'électrode supérieure (12) et la languette de l'électrode inférieure (13) sont disposées dans une direction opposée par rapport à la languette de l'électrode centrale (11), et
une portion latérale de chacune de la languette de l'électrode centrale (11), du séparateur supérieur (14) et du séparateur inférieur (15) est disposée dans une direction opposée à une direction de transport de la cellule unitaire par rapport à une autre des portions latérales de chacune de la languette de l'électrode centrale (11), du séparateur supérieur (14) et du séparateur inférieur (15).

3. Dispositif de fabrication de cellule unitaire selon la revendication 2, dans lequel la languette de l'électrode supérieure (12) et la languette de l'électrode inférieure (13) sont espacées l'une de l'autre dans une même direction que la languette de l'électrode centrale (11),
une portion latérale de chacun du séparateur supérieur (14) et du séparateur inférieur (15) est plus proche de la languette de l'électrode centrale (11) qu'une autre des portions latérales de chacun du séparateur supérieur (14) et du séparateur inférieur (15), et
une portion latérale de la languette de l'électrode centrale (11) est plus proche d'une portion latérale de chacun du séparateur supérieur (14) et du séparateur inférieur (15) que d'une autre des portions latérales de la languette de l'électrode centrale (11).

4. Dispositif de fabrication de cellule unitaire selon la revendication 1, dans lequel, lorsque la direction de transport de chacune de l'électrode centrale (11), de l'électrode supérieure (12) et de l'électrode inférieure (13) est une direction longitudinale, et une direction perpendiculaire à la direction longitudinale sur un plan est une direction de largeur, la partie de commande est configurée pour corriger la position de l'électrode centrale (11) dans la direction de largeur et est configurée pour corriger la position de chacune de l'électrode supérieure (12) et de l'électrode inférieure (13) dans la direction longitudinale et la direction de largeur.

5. Dispositif de fabrication de cellule unitaire selon la revendication 4, dans lequel la partie de commande est configurée pour corriger la position de chacune de l'électrode supérieure (12) et de l'électrode inférieure (13) dans la direction longitudinale en réglant la vitesse de chacune de l'électrode supérieure (12) et de l'électrode inférieure (13) fournies à la partie de transport de stratifié (211).

6. Dispositif de fabrication de cellule unitaire selon la revendication 4, dans lequel la partie de commande est configurée pour corriger la position de chacune de l'électrode centrale (11), de l'électrode supérieure (12) et de l'électrode inférieure (13) dans la direction de largeur en réglant la position du capteur de commande de position de bord (EPC) mesurant la position d'au moins une des deux portions d'extrémité de chacune de l'électrode centrale (11), de l'électrode supérieure (12) et de l'électrode inférieure (13).

7. Dispositif de fabrication de cellule unitaire selon la revendication 1, dans lequel la partie de commande est configurée de sorte que si la distance entre une portion latérale du séparateur supérieur (14) et une portion latérale de la languette de l'électrode centrale (11) mesurée par la partie de vision supérieure (312T) et la distance entre une portion latérale du séparateur inférieur (15) mesurée par la partie de vision inférieure (312B) et une portion latérale de la languette de l'électrode centrale (11) est supérieure à la valeur de référence, la partie de commande corrige la position de coupe de la partie de coupe de stratifié (212) dans une direction d'une portion latérale de la languette de l'électrode centrale (11) en direction de l'autre portion latérale, et la partie de commande est configurée de sorte que si la distance entre une portion latérale du séparateur supérieur (14) et une portion latérale de la languette de l'électrode centrale (11) mesurée par la partie de vision supérieure (312T) et la distance entre une portion latérale du séparateur inférieur (15), mesurée par la partie de vision inférieure (312B) et une portion latérale de la languette de l'électrode centrale (11) est inférieure à la valeur de référence, la partie de commande corrige la position de coupe de la partie de coupe de stratifié (212) dans une direction de l'autre portion latérale de la languette de l'électrode centrale (11) en direction d'une portion latérale.

8. Dispositif de fabrication de cellule unitaire selon la revendication 1, dans lequel la partie de commande est configurée de sorte que si la distance entre une portion latérale du séparateur supérieur (14) et une portion latérale de l'électrode supérieure (12) mesurée par la partie de vision supérieure (312T) est supérieure à une valeur de référence et la distance entre l'autre portion latérale du séparateur supérieur (14) et l'autre portion latérale de l'électrode supérieure (12) est inférieure à la valeur de référence, la partie de commande corrige l'électrode supérieure (12) dans une direction de l'autre portion latérale de l'électrode supérieure (12) en direction d'une portion latérale,
la partie de commande est configurée de sorte que si la distance entre une portion latérale du séparateur inférieur (15) et une portion latérale de l'électrode inférieure (13) mesurée par la partie de vision inférieure (312B) est supérieure à la valeur de référence et la distance entre l'autre portion latérale du séparateur inférieur (15) et l'autre portion latérale de l'électrode inférieure (13) est inférieure à la valeur de référence, la partie de commande corrige l'électrode inférieure (13) dans une direction de l'autre portion latérale en direction d'une portion latérale,
la partie de commande est configurée de sorte que si la distance entre une portion d'extrémité du séparateur supérieur et une portion d'extrémité de l'électrode supérieure (12) mesurée par la partie de vision supérieure (312T) est supérieure à la valeur de référence et la distance entre l'autre portion d'extrémité du séparateur supérieur (14) et l'autre portion d'extrémité de l'électrode supérieure (12) est inférieure à la valeur de référence, la partie de commande corrige l'électrode supérieure (12) dans une direction de l'autre portion d'extrémité de l'électrode supérieure (12) en direction d'une portion d'extrémité, et
la partie de commande est configurée de sorte que si la distance entre une portion d'extrémité du séparateur inférieur (15) et une portion d'extrémité de l'électrode inférieure (13) mesurée par la partie de vision inférieure (312B) est supérieure à la valeur de référence et la distance entre l'autre portion d'extrémité du séparateur inférieur (15) et l'autre portion d'extrémité de l'électrode inférieure (13) est inférieure à la valeur de référence, la partie de commande corrige l'électrode inférieure (13) dans une direction de l'autre portion d'extrémité de l'électrode inférieure (13) en direction d'une portion d'extrémité.

9. Dispositif de fabrication de cellule unitaire selon la revendication 1, dans lequel la partie de commande est configurée de sorte que si la distance entre une portion d'extrémité du séparateur supérieur (14) et la portion d'extrémité de la languette de l'électrode centrale (11) mesurée par la partie de vision supérieure (312T) est supérieure à la valeur de référence, la partie de commande corrige la position de l'électrode centrale (11) dans une direction d'une portion d'extrémité du séparateur supérieur en direction de l'autre portion d'extrémité, et la partie de commande est configurée de sorte que si la distance entre une portion d'extrémité du séparateur supérieur (14) et la portion d'extrémité de la languette de l'électrode centrale (11) mesurée par la partie de vision supérieure (312T) est inférieure à la valeur de référence, la partie de commande corrige la position de l'électrode centrale (11) dans une direction de l'autre portion d'extrémité du séparateur supérieur (14) en direction d'une portion d'extrémité, et
la partie de commande est configurée de sorte que si la distance entre une portion d'extrémité du séparateur inférieur (15) et la portion d'extrémité de la languette de l'électrode centrale (11) mesurée par la partie de vision inférieure (312B) est supérieure à la valeur de référence, la partie de commande corrige la position de l'électrode centrale (11) dans une direction d'une portion d'extrémité du séparateur inférieur (15) en direction de l'autre portion d'extrémité, et la partie de commande est configurée de sorte que si la distance entre une portion d'extrémité du séparateur inférieur (15) et la portion d'extrémité de la languette de l'électrode centrale (11) mesurée par la partie de vision inférieure (312B) est inférieure à la valeur de référence, la partie de commande corrige la position de l'électrode centrale (11) dans une direction de l'autre portion d'extrémité du séparateur inférieur (15) en direction d'une portion d'extrémité.

10. Dispositif de fabrication de cellule unitaire selon la revendication 1, dans lequel la partie de vision (312) est configurée pour mesurer la valeur de mesure de chacune d'une pluralité de cellules unitaires, et la partie de commande est configurée pour calculer la valeur de correction de position sur la base de la valeur moyenne des valeurs de mesure de chacune d'une pluralité de cellules unitaires.

11. Dispositif de fabrication de cellule unitaire selon la revendication 10, dans lequel la partie de commande est configurée pour définir le nombre d'une pluralité de cellules unitaires utilisées dans le calcul de la valeur de correction de position et/ou la valeur de correction de position à laquelle la correction est initiée et/ou le pourcentage de la valeur de correction de position réelle par rapport à la valeur de correction de position et/ou le premier cycle de transmission de contrôleur logique programmable (CLP) et le second cycle de transmission de CLP pour transmettre la valeur de correction de position au CLP, ainsi que le cycle auquel le second cycle de transmission de CLP est appliqué,
le second cycle de transmission de CLP est un cycle qui est appliqué immédiatement après le remplacement du type de cellule unitaire, et
le premier cycle de transmission de CLP est un cycle qui est appliqué après l'application du second cycle de transmission de CLP pendant un cycle pour appliquer le second cycle de transmission de CLP.

12. Dispositif de fabrication de cellule unitaire selon la revendication 10, dans lequel la partie de commande est configurée de sorte que lors du calcul de la valeur de correction de position, la partie de commande exclut au moins l'une d'une valeur de mesure en dehors de la plage de référence parmi les valeurs de mesure de la n^{ème} cellule unitaire et une valeur de mesure présentant une différence égale ou supérieure à la valeur de référence à partir de la valeur de mesure de la n-1^{ème} cellule unitaire, à partir des valeurs de mesure qui constituent la base du calcul.

13. Procédé de fabrication de cellule unitaire, comprenant :
une formation d'un stratifié (20) contenant une électrode centrale (11), un séparateur supérieur (14) disposé sur une première surface de l'électrode centrale (11), un séparateur inférieur (15) disposé sur une seconde surface de l'électrode centrale (11),
une électrode supérieure (12) disposée sur le séparateur supérieur (14) et une électrode inférieure (13) disposée sur le séparateur inférieur (15) ;
une formation d'une cellule unitaire par la coupe du séparateur supérieur (14) et du séparateur inférieur (15) du stratifié (20) ;
une mesure d'une valeur de mesure comprenant des informations de position de l'électrode centrale (11) et/ou du séparateur supérieur (14) et/ou du séparateur inférieur (15) et/ou de l'électrode supérieure (12) et/ou de l'électrode inférieure (13) de la cellule unitaire ;
un calcul d'une valeur de correction de position de l'électrode centrale (11) et/ou du séparateur supérieur (14) et/ou du séparateur inférieur (15) et/ou de l'électrode supérieure (12) et/ou de l'électrode inférieure (13), sur la base de la valeur mesurée ; et
une correction d'au moins l'une de la position de l'électrode centrale (11) dans l'étape de formation du stratifié (20), de la position de l'électrode supérieure (12) dans l'étape de formation du stratifié (20), de la position de l'électrode inférieure (13) dans l'étape de formation du stratifié (20), ou de la position de coupe du stratifié (20) dans l'étape de formation de la cellule unitaire, sur la base de la valeur de correction de position.

14. Procédé de fabrication de cellule unitaire selon la revendication 13, dans lequel la mesure de la valeur de mesure inclut la mesure de la valeur de mesure de chacune d'une pluralité de cellules unitaires, et
le calcul de la valeur de correction de position est basé sur la valeur moyenne des valeurs de mesure de chacune de la pluralité de cellules unitaires.
